(19) **Europäisches Patentamt / European Patent Office / Office européen des brevets**

(11) **EP 1 908 790 A1**

(12) **EUROPEAN PATENT APPLICATION**
published in accordance with Art. 153(4) EPC

(43) Date of publication:
   **09.04.2008 Bulletin 2008/15**

(21) Application number: **06781265.1**

(22) Date of filing: **19.07.2006**

(51) Int Cl.:
   **C08G 77/04** $^{(2006.01)}$

(86) International application number:
   **PCT/JP2006/314298**

(87) International publication number:
   **WO 2007/010949 (25.01.2007 Gazette 2007/04)**

(84) Designated Contracting States:
   **AT BE BG CH CY CZ DE DK EE ES FI FR GB GR HU IE IS IT LI LT LU LV MC NL PL PT RO SE SI SK TR**

(30) Priority: **19.07.2005 JP 2005209000**
   **05.08.2005 JP 2005228500**

(71) Applicants:
   • **Dynax Corporation**
     **Chitose-shi**
     **Hokkaido 066-8585 (JP)**
   • **Kyoto University**
     **Kyoto-shi, Kyoto 606-8501 (JP)**

(72) Inventors:
   • **NAKANISHI, Kazuki,**
     **c/o Graduate School of Science**
     **Sakyo-ku,**
     **Kyoto-shi,**
     **Kyoto 6068502 (JP)**

   • **KANAMORI, Kazuyoshi**
     **c/o Graduate School of Science**
     **Sakyo-ku,**
     **Kyoto-shi,**
     **Kyoto 6068502 (JP)**
   • **AIZAWA, Mamoru**
     **Chitose-shi,**
     **Hokkaido 0668585 (JP)**
   • **TAMURA, Kentaro**
     **Chitose-shi,**
     **Hokkaido 0668585 (JP)**

(74) Representative: **Hart-Davis, Jason et al**
   **Cabinet Beau de Loménie,**
   **158, rue de l'Université**
   **75340 Paris Cedex 07 (FR)**

(54) **METHOD FOR PRODUCING ALKYLSILOXANE AEROGEL, ALKYLSILOXANE AEROGEL, APPARATUS FOR PRODUCING SAME, AND METHOD FOR MANUFACTURING PANEL CONTAINING SAME**

(57) A method for producing an alkylsiloxane aerogel of the invention includes (a) a step of letting a reaction to produce a sol and a reaction to convert the sol to a gel take place in one step by adding a silicon compound whose molecules have a hydrolysable functional group and a nonhydrolysable functional group to an acidic aqueous solution containing a surfactant, and (b) a step of drying the gel produced in the step (a). In the step (b), the gel is dried at a temperature and a pressure below the critical point of a solvent used to dry the gel.

FIG. 4

**Description**

Technical Field

The present invention relates to a method for producing alkylsiloxane aerogel, alkylsiloxane aerogel, an apparatus for producing the same, and a method for manufacturing a panel containing the same.

Background Art

Aerogels have a high porosity and an extremely low thermal conductivity. Hence, they are known as highly efficient thermal insulators. Further, owing to their high visible-light transmittance and low specific gravity of around 0.1 to 0.2, it has been studied to use aerogels for thermal insulators for solar thermal collector panels or thermal-insulating window materials for housing.

Generally, inorganic porous materials, such as aerogels, are produced by a sol-gel processing, which utilizes a liquid phase reaction. Alcogels that are used for conventional methods for producing aerogels are obtained as follows. That is, a silicon compound is diluted with an alcohol solvent so that the silica content is about 4 to 5%, which then is subjected to hydrolytic polycondensation using an acid or basic catalyst. When observed at the nanolevel, however, the pore structure is unhomogeneous.

When aerogels are used as transparent thermal insulators, in order to ensure transparency and thermal insulation, they have to be formed with a homogeneous pore structure having an average pore diameter of 40 nm or smaller and to have a porosity exceeding 80%.

Accordingly, in the case of aerogels that are obtained by the sol-gel processing, there have been attempts to control the pore size by controlling the reaction conditions during the gel synthesis.

However, conventional aerogels that are obtained by the sol-gel processing are limited to those having an average pore diameter of not more than several nanometers and having a wide pore diameter distribution. In other words, it is not possible to control the pore size and the pore diameter distribution readily. This is because since the pores are present in a network that is constrained three-dimensionally, the pore structure cannot be modified from the outside in a nondestructive manner once the gels are prepared.

In JP10(1998)-182261A, the present inventors proposed, as a method for solving the above problems, a method for producing an inorganic porous material, including: dissolving a nonionic surfactant in an acidic solution; adding a metal compound having a hydrolysable functional group to the resulting solution for a hydrolysis reaction to take place; and heating and drying the product after it is solidified. The porous material obtained by this method has a structure in which uniform through-holes having a center pore diameter of about 2 $\mu$m and the gel skeletons having a thickness of about 1 $\mu$m are intertwined with each other in the form of a three-dimensional network. In short, according to this method, it is possible to produce a porous material that is controlled to have a desired pore diameter distribution.

In the conventional method described above, however, the alcogel is dried by a general drying method under atmospheric pressure. This method therefore has a problem that the gel contracts or cracks due to stress caused by capillary force inside the alcogel when a solvent is removed from the alcogel. The capillary force applied to pores in the alcogel generally is expressed as:

$$P_c = -2\gamma cos(\theta)/a$$

where $P_c$ is the capillary force, $\gamma$ is the surface tension of the solvent, $\theta$ is the angle of contact between the solvent and the capillary wall, and $a$ is the pore diameter. The capillary force increases as the pore diameter becomes smaller and the surface tension of the solvent becomes higher, and the gel becomes more susceptible to breaking.

A method for avoiding such a problem would be drying the gel under the supercritical condition, or imparting to the gel the skeleton strength exceeding the capillary force or the skeleton flexibility for allowing the gel to undergo deformation freely following the capillary force.

The supercritical drying method is a method by which the alcogel is introduced into a high-pressure container, and a solvent used for drying is turned into a supercritical fluid by adjusting a temperature and a pressure thereof to or above the critical point for the solvent to be removed from the gel. By releasing the supercritical fluid gradually from the gel in a state here it is filled with supercritical fluid, no gas-liquid interface is formed. It is thus possible to carry out the drying without letting the surface tension act on the pores in the gel.

The supercritical drying, however, involves a high-pressure process. Hence, not only does it require a significant capital investment, such as a special apparatus that can withstand the supercritical condition, but it also takes considerable time and labor.

In a case where the gel is dried at a temperature and a pressure at or below the supercritical point of the solvent, the skeleton strength of the gel has to exceed the capillary force. In addition, in order to reduce the capillary force, the pore diameter in the gel has to be made larger. Making the pore diameter in the gel larger, however, gives rise to the scattering of visible light, which lowers the transmittance. This method is therefore not suitable when the porous material is used as transparent thermal insulators. Accordingly, given 400 to 780 nm as the wavelength of visible light, then the average pore diameter has to be 40 nm or smaller.

The inorganic porous material obtained by the method described in JP10(1998)-182261A *supra* is controlled to have a pore distribution at the micron level. This method therefore has a problem that the pore diameter is too large when the porous material is applied to transparent thermal insulators. In addition, existing aerogels disclosed in JP2005-154195A are so brittle that there is a need to further enhance the strength.

Disclosure of the Invention

In view of the foregoing, the invention is intended to provide a method for producing an alkylsiloxane aerogel capable of drying the gel under atmospheric pressure owing to the skeleton strength and the skeleton flexibility of the gel enhanced by controlling the pore structure in a mesoscopic region. The invention is also intended to provide an alkylsiloxane aerogel having higher strength than the conventional aerogels and an apparatus for producing the same. The invention is further intended to provide a method for manufacturing a panel containing the alkylsiloxane aerogel.

A method for manufacturing an alkylsiloxane aerogel according to one aspect of the invention is a method for producing an alkylsiloxane aerogel, including:

(a) a step of letting a reaction to produce a sol and a reaction to convert the sol to a gel take place in one step by adding a silicon compound whose molecules have a hydrolysable functional group and a nonhydrolysable functional group to an acidic aqueous solution containing a surfactant; and

(b) a step of drying the gel produced in the step (a),

wherein, in the step (b), the gel is dried at a temperature and a pressure below the critical point of a solvent used to dry the gel.

A specific method for letting the reaction to produce a sol and the reaction to convert the sol to a gel take place in one step (hereinafter, occasionally referred to also as the one-step reaction) in the step (a) may be, for example, a method by which, in the step (a), the acidic aqueous solution further contains a hydrolysable compound that produces a material promoting the reaction to convert the sol to a gel through hydrolysis, and the reaction to convert the sol to a gel is carried out by letting the hydrolysable compound undergo hydrolysis.

The term, "one-step reaction", referred to herein means that the production of a sol through a hydrolysis reaction of the silicon compound and the following gelling through a polycondensation reaction are carried out continuously in the identical solution composition. Also, the term, "nonhydrolysable functional group", referred to herein means a functional group that is not hydrolyzed in an aqueous solution whose $[H^+]$ ion concentration is 5 M or below or whose $[OH]$ ion concentration is 5 M or below.

An alkylsiloxane aerogel produced by the producing method of the present invention has a three-dimensional network structure in the mesoscopic region formed of through-holes that are contiguous with each other in the form of a three-dimensional network and gel skeletons in the form of a three-dimensional network. Because this three-dimensional network structure imparts to the gel the skeleton strength exceeding capillary force acting on the gel and the skeleton flexibility, it is possible to dry the gel under atmospheric pressure without the gel being broken. Also, because the alcogel is dried at a temperature and a pressure below the critical point of the solvent used for drying, it is possible to produce an alkylsiloxane aerogel at a lower cost than the supercritical drying method that requires equipment such as a high-pressure container. The term, "alcogel", referred to herein means a humid gel containing the solvent or the like (in a state before the solvent is dried).

An alkylsiloxane aerogel according to another aspect of the invention has a three-dimensional network structure formed of through-holes that are contiguous with each other in a for of a three-dimensional network and skeletons that are ade of alkylsiloxane and contiguous with each other in a form of a three-dimensional network. A diameter of the through-holes is in a range from 5 nm to 100 nm both inclusive and a diameter of a sectional area of the skeletons is in a range from 2 nm to 25 nm both inclusive.

The alkylsiloxane aerogel of the present invention is able to achieve both high mechanical strength and high visible-light transmittance simultaneously.

A producing apparatus used for producing an alkylsiloxane aerogel according to still another aspect of the invention includes: a dryer that dries an alkylsiloxane gel containing a solvent, and the dryer includes: a hermetically sealable container capable of accommodating therein the alkylsiloxane gel; a control portion capable of controlling an evaporation rate of the solvent contained in the alkylsiloxane gel; and stirring means, provided inside the container, for making a gas concentration of the solvent inside the container homogeneous by stirring atmosphere within the container.

According to this apparatus, because the gas concentration of the solvent inside the container can be made homogeneous, the generation of a difference of evaporation rates of the solvent from the gel can be suppressed. It is thus possible to suppress breaking of the gel resulting from a difference of evaporation rates of the solvent.

A method for manufacturing a panel containing an alkylsiloxane aerogel according to still another aspect of the invention includes:

(A) a step of letting a reaction to produce a sol and a reaction to convert the sol to a gel take place in one step by adding a silicon compound whose molecules have a hydrolysable functional group and a nonhydrolysable functional group to an acidic aqueous solution containing a surfactant;

(B) a step of letting the gel produced in the step (A) contract by drying the gel at a temperature and a pressure below a critical point of a solvent used to dry the gel; and

(C) a step of placing the gel that has contracted inside a frame, followed by further drying of the gel at a temperature and a pressure below the critical point of the solvent for allowing the gel to adhere closely to the frame by letting a volume of the gel restore, so that the gel and the frame are made into a single piece.

According to the method for manufacturing the panel of the present invention, it is possible to join the panel made of an alkylsiloxane aerogel to a frame without having to use joining means, such as an adhesive agent. Hence, even when the panel uses an alkylsiloxane aerogel having poor affinity to an adhesive agent, it is possible to reinforce the panel with the frame to impart strength. Accordingly, an alkylsiloxane aerogel can be used readily as transparent thermal insulators for solar thermal collector panels.

Brief Description of the Drawings

FIG. 1 is a view used to describe a one-step reaction.

FIG. 2 is a view used to describe a two-step reaction.

FIG. 3 is a schematic view showing an example of a dryer in a producing apparatus of the invention.

FIG. 4 is a view showing a state of a three-dimensional network structure of an alkylsiloxane aerogel of Sample 1 as one example when observed using a scanning electron microscope.

FIG. 5 is a view showing a state of an inner pore structure of an alkylsiloxane aerogel of Sample 9 as another example when observed using a scanning electron microscope.

Best Mode for Carrying Out the Invention

Hereinafter, embodiments of the invention will be described.

(First Embodiment)

One embodiment of a method for producing an alkylsiloxane aerogel of the present invention and one embodiment of an alkylsiloxane aerogel of the present invention will be described.

A method for producing an alkylsiloxane aerogel according to this embodiment is a method for producing an alkylsiloxane aerogel, including:

(a) a step of letting a reaction to produce a sol and a reaction to convert the sol to a gel take place in one step (letting a one-step reaction take place) by adding a silicon compound whose molecules have a hydrolysable functional group and a nonhydrolysable functional group to an acidic aqueous solution containing a surfactant; and

(b) a step of drying the gel produced in the step (a),

wherein, in the step (b), the gel is dried at a temperature and a pressure below the critical point of a solvent used to dry the gel.

The term "one-step reaction" referred to herein means, as described above, that the production of a sol through a hydrolysis reaction of the silicon compound and the gelling through a polycondensation reaction of the sol thus produced are carried out continuously in the identical solution composition. Contrary to the one-step reaction, a method known as a two-step reaction is to carry out the gelling through a polycondensation reaction of the sol using a different solution composition, which is prepared through the addition of a catalyst of a different type after the sol is produced through hydrolysis of the silicon compound.

A silicon compound whose molecules have a hydrophilic hydrolysable functional group and a hydrophobic nonhydrolysable functional group is used as the silicon compound that is a starting raw material to be used in the sol-gel processing.

Different from a silicon compound whose functional groups are all hydrolysable and thereby has the bonds that are all either siloxane bonds or silanol bonds after the hydrolysis and polycondensation reactions, the silicon compound described above has siloxane bonds in part and stable terminal groups containing silicon-carbon bonds in part after the hydrolysis and polycondensation reactions. This allows the silicon compound whose molecules have a hydrolysable functional group and a nonhydrolysable functional group to form a siloxane network having a chemical property of a nonhydrolysable functional group. In addition, a silicon compound whose molecules have a nonhydrolysable functional group is able to form a more flexible network than a silicon compound whose molecules have a hydrolysable functional group alone.

As the silicon compound, for example, alkyl silicon alkoxide is used preferably. Among alkyl silicon alkoxides, those having one or two nonhydrolysable functional groups are particularly preferable. To be more concrete, examples include but are not limited to methyltrimethoxysilane and dimethyldimethoxysilane. In particular, in the producing method of this embodiment, when an alkylsiloxane aerogel is produced using methyltrimethoxysilane, the pore structure in the mesoscopic region (1 nm to 100 nm) can be formed more homogeneously, which can in turn impart high skeleton flexibility to the gel to be produced.

It has been known that a sol-gel reaction is difficult for methyltrimethoxysilane alone, and gelling has been confirmed only under the strongly acidic or strongly basic condition in a one-step reaction. This conventional method, however, succeeds merely in obtaining an alkylsiloxane aerogel having a low porosity and minute pores (H. Dong et al., Chem. Master 200517(11)2807-2816). By the two-step reaction, it is possible to obtain an alkylsiloxane aerogel having a relatively high porosity. However, there has been no report about a success in controlling both the pore diameter size and the homogeneity sufficient to ensure the transparency

Contrarily, according to the producing method of this embodiment, it is possible to let a polycondensation reaction of methyltrimethoxysilane take place in one step. Consequently, not only is it possible to impart the skeleton flexibility to the gel, but it is also possible to obtain the gel that is transparent and has a homogeneous pore structure.

Other examples of alkyl silicon alkoxide that can be expected to provide a similar effect to the effect provided by methyltrimethoxysilane and dimethyldimethoxysilane include but are not limited to bistrimethoxysilymethane, bistrimethoxysilyethane, bistrimethoxysilyhexane, ethyltrimethoxysilane, and vinyltrimethoxysilane. A similar effect can be expected also with these compounds in which methoxy groups are substituted by other alkoxy groups (most typically, ethoxy groups), either in part or in entirety (such as bistriethoxysilymethane).

The amount of the silicon compound to be added is preferably 1 g to 10 g with respect to 10 g of the acidic aqueous solution.

The silicon compound to be used in this embodiment may be only one type among the silicon compounds specified above or a mixture of plural silicon compounds specified above.

The surfactant to be used in this embodiment can be either a nonionic surfactant or an ionic surfactant. The ionic surfactant can be a cationic surfactant, an anionic surfactant, and an amphoteric surfactant, and the cationic surfactant and the anionic surfactant are used suitably.

These surfactants are materials that induce a sol-gel transition and a phase separation process simultaneously. These surfactants each allow the solution to be separated into a solvent-rich phase and a skeleton phase and to gel at the same time.

The nonionic surfactant can be, for example, one containing a hydrophilic moiety, such as polyoxyethylene, and a hydrophobic moiety consisting mainly of an alkyl group, and one containing polyoxypropylene as a hydrophilic moiety. As the one containing a hydrophilic moiety, such as polyoxyethylene, and a hydrophobic moiety consisting mainly of an alkyl group, for example, polyoxyethylene nonylphenly ether, polyoxyethylene octylphenyl ether, and polyoxyethylene alkyl ether can be used suitably. As the one containing polyoxypropylene as a hydrophilic moiety, for example, polyoxypropylene alkyl ether and a block copolymer of polyoxyethylene and polyoxypropylene can be used suitably.

In addition, the cationic surfactant to be used herein is preferably cetyltrimethylammonium bromide or cetyltrimethylammonium chloride.

The anionic surfactant to be used herein is preferably sodium dodecyl sulfonate.

As the amphoteric surfactant, those based on amino acid, betaine, and amine oxide can be used. As one based on amino acid, for example, acyl glutamic acid can be used suitably. As one based on betaine, for example, lauryldimethylaminoacetic acid betaine and stearyldimethylaminoacetic acid betaine can be suitably used. As one based on amine oxide, for example, lauryldimethylamine oxide can be used suitably.

When the silicon compound having a hydrolysable functional group and a nonhydrolysable functional group forms a siloxane network while maintaining the nonhydrolysable functional group through hydrolysis and polycondensation reactions, these surfactants lessen a difference of chemical affinities between the solvent in the reaction system and a siloxane polymer being grown so as to suppress the tendency of phase separation induced by a polymerization reaction. By suppressing the tendency of phase separation, pores to be frozen in a material that has been solidified through sol-gel transition can be made finer, which makes it possible to maintain a fine phase separation structure at the mesoscopic level.

It should be appreciated that the respective surfactants are not limited to the concrete examples specified above.

Although it depends on the type of the surfactant, the type and the amount of the silicon compound, the amount of the surfactant to be added is 0.1 to 10.0 g, and more preferably, 0.5 to 6.0 g with respect to 10 g of the silicon compound. In addition, these surfactants can be used individually, or a mixture of two or more of them can be used.

The acid to be used as an acid catalyst for the silicon compound, that is, an acid in the acidic aqueous solution in which the silicon compound is to be dissolved is preferably carboxylic acids, such as acetic acid, formic acid, propionic acid, oxalic acid, and malonic acid. Among these, acetic acid is particularly preferable. In addition, the acid concentration of the acidic aqueous solution is, for example, in a range from 0.0003 mol/L to 0.05 mol/L, and a range from 0.0008 mol/L to 0.02 mol/L is particularly preferable.

In this embodiment, a concrete method for achieving a one-step reaction may be a method by which, in the step (a), a hydrolysable compound that produces a material promoting the reaction to convert the sol to a gel through hydrolysis is further added to the acidic aqueous solution in which the surfactant has been dissolved, so that the reaction to convert the produced sol to a gel takes place continuously with the production of the sol by letting the hydrolysable compound undergo hydrolysis.

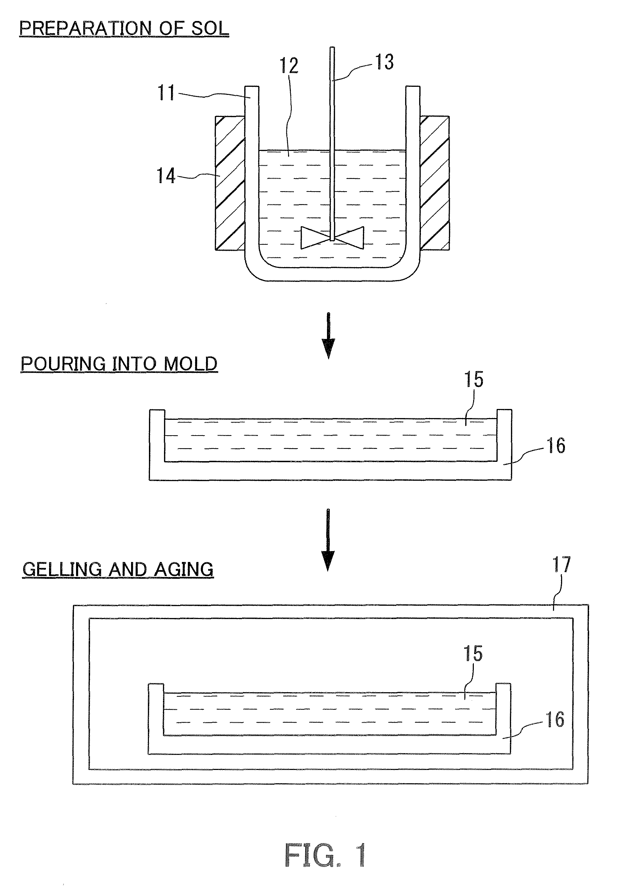

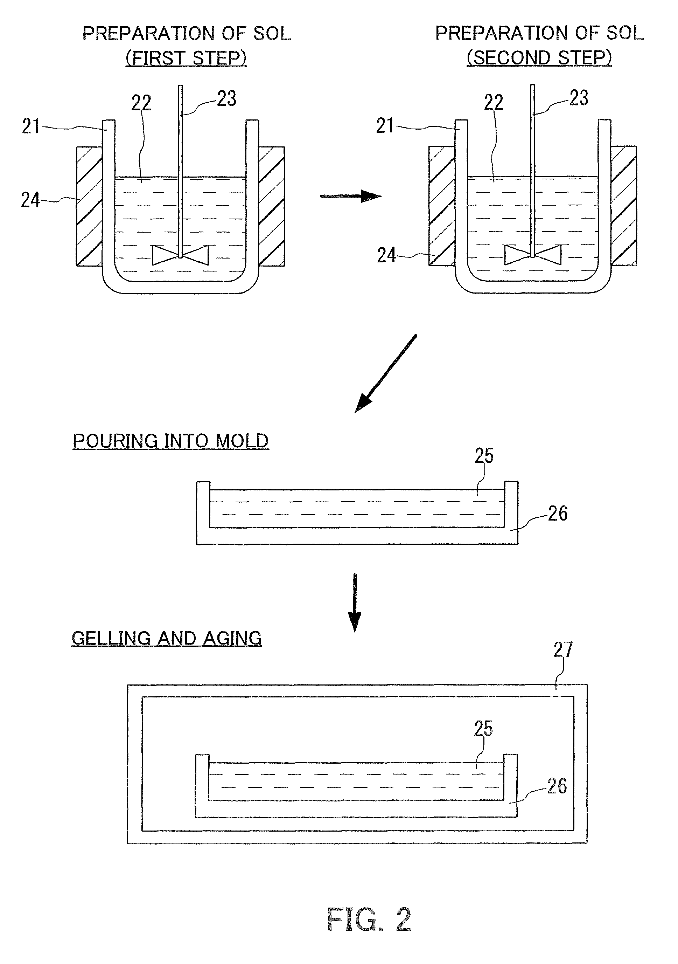

FIG. 1 is a view used to describe the one-step reaction. FIG. 2 is a view used to describe the two-step reaction. As is shown in FIG. 1, in the one-step reaction, an acidic aqueous solution 12 in which are dissolved the surfactant, the silicon compound, and the hydrolysable compound is placed into a reaction container 11 first, and the solution is stirred with a stirrer 13. A temperature control jacket 14 is provided on the periphery of the reaction container 11, so that the temperature of the solution in the reaction container 11 can be adjusted. After the sol is produced inside the reaction container 11, the sol 15 thus produced is poured into a mold 16, and allowed to undergo a gelling reaction and aging inside an incubator 17 maintained, for example, at 60˚C. It should be noted that in the one-step reaction, the reaction solution has a relatively low viscosity until the gelling reaction starts. As has been described, because the gelling reaction is carried out while the sol is poured into the mold in the one-step reaction, the viscosity of the reaction solution at the stirring stage is relatively low. Hence, in the case of the one-step reaction, it is possible to obtain a homogeneous solution with stirring at a relatively low rate.

Meanwhile, in the two-step reaction, as is shown in FIG. 2, an acidic aqueous solution 22 in which are dissolved the surfactant and the silicon compound is placed into a reaction container 21 and the solution is stirred with a stirrer 23. A temperature adjusting jacket 24 is provided on the periphery of the reaction container 21, so that the temperature of the solution in the reaction container 21 can be adjusted. Subsequently, for example, ammonium is added as a catalyst to prepare another solution composition, and the solution is stirred further. Because a solidification reaction starts upon addition of ammonium, a speedy operation is required. Thereafter, the gel 25 thus produced is poured into a mold 26 and allowed to undergo aging inside an incubator 27 maintained, for example, at 60˚C. It should be noted that in the two-step reaction, an initial polymerization reaction proceeds in the first solution composition (the first step), and the gelling reaction takes place in the next solution composition to which ammonium or the like is further added (the second step). Because the reaction solution has relatively low viscosity during the polymerization reaction in the first step, it is possible to obtain a homogeneous solution with stirring at a relatively low rate. On the contrary, because the gelling reaction in the second step proceeds at a relatively high rate under the basic condition, it is desirable to prevent the gelling reaction from proceeding locally by producing a homogeneous reaction system in a short time. Hence, it is preferable to carry out the stirring in the second step at a higher rate with higher strength.

The hydrolysable compound to coexist with the surfactant in the acidic aqueous solution can be urea, acid amides, such as formamide, N-methylformamide, N,N-dimethylformamide, acetoamide, N-methylacetoamide, and N,N-dimethylacetoamide, and hexamethylenetetramine, which is a cyclic nitrogen compound. However, because a pH value of the solvent after hydrolysis is a crucial condition, the compound is not particularly limited as long as it allows the solvent to have basicity after hydrolysis. In addition, like hydrofluoric acid, those that produce compounds having a property to promote gelling of alkylsiloxane can be used as well. Although it depends on the type of the compound, when urea is to be used, the amount of the hydrolysable compound to be added is 0.1 to 20.0 g, and more preferably, 0.2 to 15.0 g with respect to 10 g of the silicon compound. When the amount of urea to be added is smaller than 0.1 g, because a sufficient amount of ammonium cannot be produced during the hydrolysis, either gelling does not take place satisfactorily, or gelling takes a long time. Conversely, when the amount of urea to be added exceeds 15.0 g, urea is not fully dissolved into the solution, or urea is crystallized out into crystals during the cooling process after aging and the crystals may break the microscopic structure of the gel or lower the density of the gel more than necessary.

In addition, the heating temperature for hydrolysis to take place is, for example, in a range from 50 to 200˚C in the case of urea. The pH value of the solvent after heating is preferably 9.0 to 11.0.

The silicon compound having a hydrolysable functional group and a nonhydrolysable functional group as described above is added to the acidic aqueous solution in which are dissolved the surfactant and the hydrolysable compound, so that a sol is produced by letting the silicon compound undergo hydrolysis. A time needed to produce the sol is, for example, 10 minutes to 2 hours, and preferably 20 to 40 minutes. Thereafter, the sol is heated for letting the hydrolysable compound undergo hydrolysis to produce, for example, a basic catalytic material. The sol is then converted to a gel that is separated into the solvent-rich phase and the skeleton phase by the basic catalytic material, after which gel is aged at an appropriate temperature over an appropriate period of time.

Aging is a reaction, by which microscopic unreacted moieties left in the network structure of the gel that has undergone the sol-gel transition and thereby lost fluidity (a loose network structure at this stage) gradually link the network fine with thermal oscillation or under the condition that the solvent coexists with the gel. Aging is carried out by allowing the sol to stand within the same temperature range as the range used for the gelling to take place.

In the heating process, it is effective that the gel is placed under a sealed condition, so that the vapor pressure of the product as the result of hydrolysis of the hydrolysable compound saturates and thereby the pH of the solvent is allowed to reach a steady-state value quickly.

Because the time needed for the aging varies with the size of pores and the volume of the sample, it is necessary to determine the shortest treatment time over which the pore structure substantially stops changing under each treatment condition. For example, in a case where urea is to be used as the hydrolysable compound to coexist, it is preferable for the heat treatment that the heating temperature be 50 to 200˚C and the heating time be at least 2 hours.

Subsequently, the alcogel that has been treated is dried.

In the method of the invention, the gel is dried at a temperature and a pressure below the critical point of a solvent used for drying (hereinafter, occasionally referred to also as the drying solvent).

As is indicated by the formula above expressing the capillary force, the capillary force while the alcogel is dried increases as the pore diameter becomes smaller and the surface tension of the solvent becomes higher. Hence, the gel becomes more susceptible to breaking as the pore diameter becomes smaller and the surface tension of the solvent becomes higher.

The inventors conducted studies and it is found that, for example, in a case where the average pore diameter of the gel is 20 nm or greater and the surface tension of the solvent used to dry the gel is 15 mN/m or below, the gel will not be broken hen dried at a temperature and a pressure below the critical point of the drying solvent and the resulting alkylsiloxane aerogel excels in visible-light transmittance and in mechanical strength.

As the drying solvent having the surface tension of 15 or below (hereinafter, occasionally referred to also as the low surface tension solvent), a fluorine-based solvent whose molecules have at least one fluorine atom can be used suitably. To be more concrete, examples include but are not limited to 2,3-dihydrodecafluoro-pentane (surface tension: 14.1 mN/m, product name: Vertrel XF, manufactured by DU PONT-MITSUI FLUOROCHEMICALS), perfluorohexane (surface tension: 12 mN/m, product name: Fluorinert FC-72, manufactured by Sumitomo 3M Ltd.), perfluoroheptane (surface tension: 13 mN/m, product name: Fluorinert FC-84, manufactured by Sumitomo 3M Ltd.), perfluorooctane (surface tension: 15 mN/m, product name: Fluorinert FC-77, manufactured by Sumitomo 3M Ltd.), methyl nonafluorobutyl ether (surface tension: 13.6 mN/m, product name: Novec HFE-7100, manufactured by Sumitomo 3M Ltd.), and ethyl nonafluorobutyl ether (surface tension: 13.6 mN/m, product name: Novec HFE-7200, manufactured by Sumitomo 3M Ltd.).

An example of the drying of the alcogel in this embodiment is carried out, for example, in the procedure as follows. Herein, a case will be described where acetic acid is used as the acid catalyst and urea is used as the hydrolysable compound.

Initially, the alcogel is subjected to solvent exchange in order to remove water, the acetic acid catalyst, the surfactant, urea, and an unreacted silicon compound raw material remaining in the alcogel. The solvent to be used herein is an organic polar solvent, and it is normally alcohols and preferably methanol. Hereinafter, a case will be described where methanol is used as the solvent.

After the completion of the solvent exchange of the alcogel, the solvent (herein, methanol) in the alcogel is substituted further by a low surface tension solvent. To be more concrete, the alcogel in which the solvent has been substituted by methanol (methanol-substituted gel) is placed in a low surface tension solvent in an amount sufficient for the methanol-substituted gel to be immersed, and the low surface tension solvent is heated to the vicinity of the boiling point. In this state, the low surface tension solvent was refluxed for at least 8 hours. After the low surface tension solvent is cooled to room temperature, methanol is removed and the low surface tension solvent is replaced by a fresh low surface tension solvent, which then is refluxed. This operation is repeated three times or so. The solvent exchange of the alcogel to the low surface tension solvent thus is completed. In a case where perfluoroalkane, such as Fluorinert FC-72, FC-84, or FC-77 (manufactured by Sumitomo 3M Ltd.) is to be used as the low surface tersion solvent in this instance, because perfluoroalkane is not mutually soluble with methanol, it is substituted beforehand, for example, by a hydrofluoro-based solvent, such as Novec HFE-7100 (manufactured by Sumitomo 3M Ltd.).

The gel in which the solvent has been substituted by the low surface tension solvent (low surface tension solvent-substituted gel) is placed into a container (dryer) capable of controlling an evaporation rate and the drying is started. The drying is carried out below the critical point of the low surface tension solvent and the temperature will never exceed the solvent boiling point under atmospheric temperature during the drying. Although it depends on the type of the low surface tension solvent, the suitable drying condition is normally in a range from -30˚C to 150˚C at 0.01 to 0.3 MPa, and preferably in a range from -10˚C to 100˚C at 0.09 to 0.11 MPa.

The solvent evaporation rate over 4 hours from immediately after the start of the drying per 1 $cm^3$ of the low surface tension solvent-substituted gel is, for example, in a range from 0.01 $g/(h \cdot m^3)$ to 0.4 $g/(h \cdot cm^3)$. The drying is completed when the weight of the gel becomes constant.

The alkylsiloxane aerogel obtained after the drying is formed of through-holes that are contiguous with each other in the form of a three-dimensional network and the skeletons that are made of alkylsiloxane and contiguous with each other in the form of a three-dimensional network, and thereby has a three-dimensional network structure in the mesoscopic region. The pore diameter of the through-holes that are contiguous with each other in the form of a three-dimensional network can be in a range from 5 nm to 100 nm, and preferably in a range from 25 nm to 35 nm. In addition, the diameter of the sectional area of the skeletons can be in a range from 2 nm to 25 nm, and preferably in a range from 3 nm to 7 nm.

The term, "the diameter of the section area of the skeletons", referred to herein means a diameter when the cross section of each single skeleton forming the three-dimensional network structure is assumed as being a circle. The term, "the diameter when the cross section is assumed as being circle", is a diameter of a circle when the cross section is substituted by the circle that has the equal area.

The three-dimensional network structure having the through-holes and the skeletons in the ranges as specified above and obtained by the producing method of this embodiment excels in a deformation restoring force and in compression strength in comparison with the conventional three-dimensional network structure that controlled to have a pore distribution at the micron level. In addition, such a three-dimensional network structure has a property that the skeletons contract to be folded inside the pores in a pressurized state, and the folded skeletons restore to the original state when the load is removed and thereby restore to almost the volume before application of pressure. It is preferable for the alkylsiloxane aerogel of this embodiment having such a three-dimensional network structure that the compression breaking stress be 5 MPa or higher. Also, it is preferable for the alkylsiloxane aerogel of this embodiment that it is allowed to undergo compression deformation by 50% or more without being broken and restore to a volume of 80% or more of the original after the compression deformation. In addition, it is preferable for the alkylsiloxane aerogel of this embodiment that a Poisson's ratio by uniaxial compression be 0.05 or smaller. According to the producing method of this embodiment described above, it is possible to produce the alkylsiloxane aerogel of this embodiment as has been described.

Further, it is preferable for the alkylsiloxane aerogel of this embodiment that transmittance of light having the wavelength of 550 nm to 1000 nm that is converted into a value to be obtained when the alkylsiloxane aerogel has a thickness of 10 mm be 50% or higher, and the porosity be 80% or higher. In addition, it is preferable for the alkylsiloxane aerogel of this embodiment that the density thereof be in a range from 0.05 $g/cm^3$ to 0.25 $g/cm^3$ both inclusive, and more preferably, in a range from 0.10 $g/cm^3$ to 0.20 $g/cm^3$.

By having the properties as described above, the alkylsiloxane aerogel of this embodiment is applicable to transparent thermal insulators for solar thermal collectors, transparent thermal-insulating window materials for buildings, transparent sound insulators for buildings, and so forth. Further, it is also applicable to a Cerenkov radiation detector and a cosmic dust collector. Besides the foregoing, in a case where it is doped with functional ions or molecules and used as a carrier, it is also applicable to a catalyst, a sensor, and a reaction field.

The characteristics of the alkylsiloxane aerogel, such as high strength as described above, can be obtained when the diameters of the through-holes and the skeletons forming the three-dimensional network structure fall within the ranges specified above. Accordingly, a producing method of the alkylsiloxane aerogel is not limited to the producing method of invention. For example, it is possible to obtain a target alkylsiloxane aerogel even when the alcogel is dried under the supercritical condition.

(Second Embodiment)

Another embodiment of the method for producing an alkylsiloxane aerogel of the present invention and a method for manufacturing a panel of the present invention will be described.

Because the method for producing the gel up to the drying step and materials to be used (silicon compound, surfactant, hydrolysable compound, and so forth) in the method for producing an alkylsiloxane aerogel of this embodiment are the same as those in the producing method described in the first embodiment above, detailed descriptions thereof are omitted herein.

The skeleton phase of the alcogel that has been treated in the production of the sol, the gelling reaction, and aging using the materials and the methods described in the first embodiment above has the flexibility to allow the gel to undergo deformation freely following capillary force acting on the gel. Hence, as will be described below, with this alcogel, it is possible to dry the gel at a temperature and a pressure below the critical point of the drying solvent. In addition, the alcogel has a characteristic (spring back) to restore to almost the initial volume when stress resulting from the capillary force is lessened while the solvent evaporates after the alcogel has contracted during drying in association with the capillary force.

As has been described above, the capillary force applied to the pores in the alcogel is expressed as:

$$P_c = -2\gamma cos(\theta)/a$$

where $P_c$ is the capillary force, $\gamma$ is the surface tension of the solvent, $\theta$ is the angle of contact between the solvent and the capillary wall, and $a$ is the pore diameter. The capillary force increases as the pore diameter becomes smaller and the surface tension of the solvent becomes higher, and the gel becomes more susceptible to breaking.

In this embodiment, in a case of the gel having, for example, the pore diameter of 20 nm or greater, it is possible to make the skeleton strength of the gel higher than the capillary force by setting the surface tension of the solvent used to dry the gel to 15 mN/m or lower. It is therefore possible to obtain an alkylsiloxane aerogel that will not be broken even when dried under the temperature and pressure conditions below the critical point. The concrete drying solvent to be used in this embodiment can be identical to those to be used in the embodiment above.

An example of the drying step will now be described.

The solvent in the alcogel is substituted by a drying solvent having low surface tension (low surface tension solvent). The same method as in the first embodiment above can be used for this method.

Subsequently, the wet alcogel with the low surface tension solvent is placed in a hermetic container (dryer) equipped, for example, with a valve or an electromagnetic valve and thereby capable of controlling an evaporation rate of the solvent. In this instance, the inside of the hermetic container is filled with a vapor of the low surface tension solvent.

Subsequently, the valve or electromagnetic valve provided to the hermetic container is opened and the drying is started. The drying temperature is set to or below the boiling point of the solvent. The solvent evaporation rate at the beginning of the drying (a period of about 2/3 of the entire drying time; the solvent evaporation rate is invariably constant over this period; and the entire drying time largely depends on the size of the gel and falls within a range from 4 hours to 5 days) is in a range from 0.01 g/h to 0.40 g/h per 1 cm$^3$ of the gel. In this state, the low surface tension solvent is evaporated. In this instance, the volume of the gel hardly changes (hereinafter, this period is referred to as the first drying period).

In the next stage, the gel starts to contract rapidly as it is dried, and most of evaporation of the solvent is completed at a point in time when it has contracted to 70% or less (this period is referred to as the second drying period).

Subsequently, the gel starts to restore owing to the spring back, and restores to a volume of 50% or more of the volume before the drying over a period of time about 1/4 of the entire drying step (hereinafter, this period is referred to as the third drying period). The drying is completed when the weight of the gel becomes constant.

The alkylsiloxane aerogel obtained after the drying as described above has a three-dimensional network structure in the mesoscopic region formed of through-holes that are contiguous with each other and have the average pore diameter of about 30 nm and skeletons that are made of alkylsiloxane in a one-dimensional shape.

Because the alkylsiloxane aerogel has skeletons that are rich in flexibility, it excels in the deformation restoring force and the compression strength. In a pressurized state, the skeletons forming the three-dimensional network structure contract to be folded inside. The folded skeletons restore to the original state the load is removed and they restore to almost the volume before the application of pressure. The alkylsiloxane aerogel having the three-dimensional network structure produced in this embodiment can achieve the compression breaking stress of 5 MPa or higher and it is allowed to undergo compression deformation by 50% or more without being broken and restore to a volume of 80% or more of the initial volume after compression deformation.

A method for manufacturing a panel using the alkylsiloxane aerogel of this embodiment now will be described.

A method for manufacturing a panel of this embodiment includes:

(A) a step of letting a reaction to produce a sol and a reaction to convert the sol to a gel take place in one step by adding a silicon compound whose molecules have a hydrolysable functional group and a nonhydrolysable functional group to an acidic aqueous solution containing a surfactant;
(B) a step of letting the gel produced in the step (A) contract by drying the gel at a temperature and a pressure below the critical point of a solvent used to dry the gel; and
(C) a step of placing the gel that has contracted inside a frame, followed by further drying of the gel at a temperature and a pressure below the critical point of the solvent for allowing the gel to adhere closely to the frame by letting a volume of the gel restore, so that the gel and the frame are made into a single piece.

The method for manufacturing the panel of this embodiment manufactures an aerogel panel applicable to solar thermal collector panels by utilizing the spring back phenomenon of the gel as described above.

Because the same method in the method for producing the alkylsiloxane aerogel in the first embodiment above can be used as the method (step (A)) from the production of a sol to the gelling reaction, descriptions thereof are omitted herein.

Subsequently, the alcogel thus produced is subjected to solvent substitution. The alcogel is moved into a hermetic container to let the gel contract in the first drying period and the second drying period described above (step (B)), after which the gel is taken out from the hermetic container.

The gel after the completion of the drying (first drying period and second drying period) is placed inside a frame of the panel having a capacity smaller than the volume of the gel and the gel is further dried completely (third drying period). By drying the gel placed inside the frame completely in this manner, the gel is allowed to swell owing to the spring back and adheres firmly so as to be fixed to the frame. In short, the gel and the frame are made into a single piece (step (C)).

The frame referred to herein is a polygonal frame to surround the edge of the panel. The frame may contain a plate-like material, such as a glass plate, that is to be disposed on either or both of the upper surface and the lower surface. For example, in the case of a frame provided with a plate-shaped material, the gel is placed in a space surrounded by the frame (sandwiched between the frame and the plate-shaped material) and is made into a single piece with the frame (frame and the plate-shaped material).

According to the method for manufacturing the panel using the alkylsiloxane aerogel as above, there is no need to bond the aerogel to the frame of the panel as was necessary before, and it is possible to join the gel to the frame by allowing the former to adhere firmly to the latter with a force of the gel to swell.

Consequently, because the gel is reinforced with the frame, the panel is imparted with strength high enough for practical use, which makes it easier to handle the panel. The panel can be therefore suitably used as solar thermal collectors, transparent thermal-insulating window materials for buildings, and so forth.

(Third Embodiment)

An embodiment of an apparatus for producing an alkylsiloxane aerogel of the present invention will be described.

The apparatus of this embodiment is provided with a dryer that dries an alkylsiloxane gel containing a solvent (in a state before it is dried). The dryer includes a hermetically sealable container capable of accommodating therein an alkylsiloxane gel, a control portion capable of controlling an evaporation rate of the solvent contained in the alkylsiloxane gel, and stirring means provided inside the container for making the gas concentration of the solvent inside the container homogeneous by stirring atmosphere within the container.

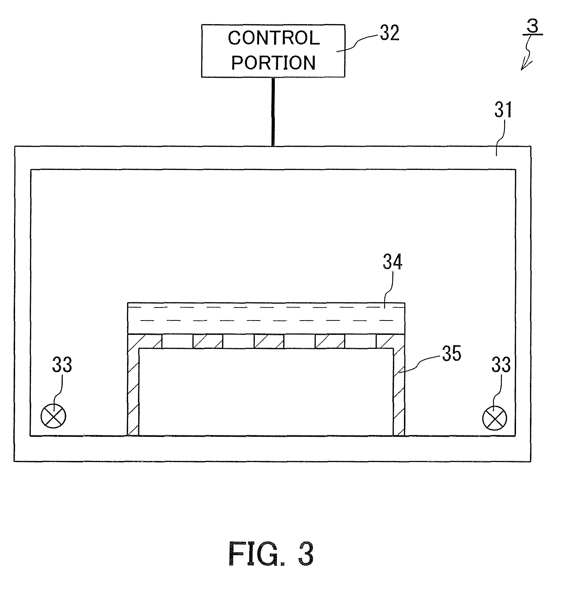

FIG. 3 is a schematic view showing an example of the dryer included in the producing apparatus of this embodiment. A dryer 3 is provided with a hermetically sealable container 31 and a control portion 32 to control an evaporation rate of the solvent from the alkylsiloxane gel within the container 31. The control portion 32 is achieved, for example, with a solvent vapor concentration sensor provided inside the hermetic container, and an electromagnetic valve that can be opened and closed according to a signal inputted therein from the solvent vapor concentration sensor and is thereby capable of adjusting the gas concentration of the solvent inside the container 31. Further, fans (stirring means) 33 that make the gas concentration of the solvent inside the container 31 homogeneous are provided inside the container 31 at the bottom of the container 31. An alkylsiloxane gel 34 to be dried is placed on a dryer stand 35 provided inside the container 31. Fans are used as an example of the stirring means. It should be appreciated, however, that the stirring means is not limited to this example. Because it is sufficient for the stirring means to circulate a gas by stirring the atmosphere within the container, for example, a pump capable of circulating the atmosphere within the container may be provided instead.

In a case where a conventional dryer is used, the solvent having evaporated from the alkylsiloxane gel collects at the bottom of the container in the dryer, which possibly may give rise to a difference of the gas concentrations of the solvent between the upper surface and the lower surface of the gel. Such a difference of gas concentrations may cause a difference of the evaporation rates of the solvent from the alkylsiloxane gel, which possibly breaks the gel. On the contrary, in the case of the dryer 3 of this embodiment shown in FIG. 3, a difference of gas concentrations of the solvent hardly is caused because of the fans 33. It is thus possible to suppress breaking of the alkylsiloxane gel during the drying.

It is preferable for the dryer of this embodiment that it is configured to adjust a difference of gas concentrations of the solvent inside the container 31 to 2 kPa (0.02 atm) or below as a difference of the gas vapor pressures.

The producing apparatus of this embodiment further may be furnished with a function of producing a sol and carrying out a gelling reaction. For example, it may be provided with a reaction device for letting a reaction to produce a sol and a reaction to convert the sol to a gel take place in one step. In this case, the reaction device includes, for example, a container portion, a stirrer that stirs a reaction material inside the container, and temperature control means for controlling the temperature of the reaction material inside the container. As the temperature controlling means, for example, a heating and cooling jacket disposed to cover the container can be used.

Examples

Hereinafter, the invention will be described more concretely by examples. It should be appreciated, however, that the invention is not limited to the examples below.

(Sample 1)

First, 1.00 g of cetyltrimethylammonium bromide (also known as hexadecyltrimethylammonium bromide, manufactured by Nacalai Tesque, Inc., hereinafter abbreviated as CTAB), which was used as a cationic surfactant, was dissolved in 10.00 g of 0.01-mol/L acetic acid aqueous solution, which was used as an acidic aqueous solution. Further, 0.50 g of urea (manufactured by Nacalai Tesque, Inc.), which was used as a hydrolysable compound, was added to the acidic aqueous solution and dissolved therein. Subsequently, 5.0 mL of methyltrimethoxysilane (LS-530 (specific gravity: 0.95), manufactured by Shin-Etsu Chemical Co., Ltd., hereinafter abbreviated as MTMS), which was used as a silicon compound, was added to the resulting acidic aqueous solution, and the acidic aqueous solution was stirred and mixed for 30 minutes while being cooled down with ice to let MTMS undergo a hydrolysis reaction. Thus a sol was produced. Subsequently, the sol thus produced was allowed to stand in a hermetic container at 60˚C so as to be converted to a gel. The gel then was allowed to stand continuously for 96 hours. Thus the gel was aged. Subsequently, the alcogel was taken out from the hermetic container and immersed in methanol for solvent substitution to take place. This operation was carried out at 60˚C for 24 hours for the first time and at 60˚C for 48 hours for the second time after the methanol was exchanged.

The alcogel was dried under atmospheric pressure (atmospheric drying) by a method as follows.

Herein, 2,3-dihydrodecafluoro-pentane (Vertrel XF manufactured by DU PONT·MITSUI FLUOROCHEMICALS) was used as a low surface tension solvent, and the solvent in the alcogel was substituted by the low surface tension solvent.

The alcogel was placed in the low surface tension solvent in an amount sufficient for the alcogel to be immersed and the low surface tension solvent was then heated to near 55˚C, which is the boiling point. In this state, the low surface tension solvent was refluxed for 8 hours. The low surface tension solvent was cooled to room temperature after the reflux. Thereafter, the low surface tension solvent was removed from the container and replaced by a fresh low surface tension solvent, which then as refluxed. This operation was repeated at least three times and the solvent exchange to low surface tension solvent was completed.

Subsequently, the low surface tension solvent-substituted gel was placed in a container (dryer) capable controlling an evaporation rate and drying was started. The drying temperature was adjusted to or below the boiling point of the solvent, and the solvent evaporation rate over 4 hours immediately from the start of the drying per 1 cm$^3$ of the low surface tension solvent-substituted gel was adjusted to 0.2 g/(h·cm$^3$). Thereafter, the solvent evaporation rate gradually was lowered and the drying was completed at a point in time when the weight of the gel became constant.

(Sample 2)

First, 1.20 g of CTAB was dissolved in 10.00 g of 0.01-mol/L acetic acid aqueous solution, which was used as an acidic aqueous solution. Further, 1.00 g of urea, which was used as a hydrolysable compound, was added to the acidic aqueous solution and dissolved therein. Subsequently, 10 mL of MTMS, which was used as a silicon compound, was added to the resulting acidic aqueous solution, and the acidic aqueous solution was stirred and mixed for 30 minutes while being cooled down with ice for letting MTMS undergo a hydrolysis reaction. Thereafter, the resulting sol was allowed to stand in a hermetic container at 60˚C so as to be converted to a gel, after which the gel was allowed to stand continuously for 96 hours. Thus the gel was aged.

After the gel was subjected to solvent substitution with methanol, the solvent was replaced by the low surface tension solvent same as the one used in Sample 1, and the atmospheric drying was carried out under the same condition as in Sample 1.

(Sample 3)

First, 2.00 g of Poly(ethylene glycol)-block-poly(propylene glycol)-block-poly(ethylene glycol)(manufactured by BASF Japan Ltd, F-127 (EO108PO70EO108 Mw:12600)), which is a block copolymer of polyoxyethylene and polyoxypropylene and was used as a nonionic surfactant, was dissolved in 10.00 g of 0.01-mol/L acetic acid aqueous solution, which was used as an acidic aqueous solution. Subsequently, 1.00 g of urea, which was used as a hydrolysable compound, was added to the acidic aqueous solution and dissolved therein. After 10 mL of MTMS was added, the resulting acidic aqueous solution was stirred and mixed for 30 minutes while being cooled down with ice for letting MTMS undergo a hydrolysis reaction. Thereafter, the resulting sol was allowed to stand in a hermetic container at 60˚C to be converted to a gel, and the gel was allowed to continuously for 96 hours. Thus the gel was aged.

After the gel was subjected to solvent substitution with methanol, the solvent was substituted by the same low surface tension solvent as the one in Sample 1, and atmospheric drying was carried out under the same condition as in Sample 1.

(Sample 4)

An alcogel was produced in the same manner as in Sample 1 except that the silicon compound was changed from MTMS used in Sample 1 to tetraethoxysilane (manufactured by Nacalai Tesque, Inc., hereinafter abbreviated as TEOS) and the concentration of the acetic acid aqueous solution was changed from 0.01 mol/L to 0.001 mol/L. Atmospheric drying was carried out under the same condition as in Sample 1 except that the low surface tension solvent was changed from Vertrel XF to Fluorinert FC-72.

(Sample 5)

An alcogel was produced and aged under the same condition as in Sample 1, after which the alcogel was taken out from the hermetic container and immersed in 2-propanol for solvent substitution to take place. This operation was carried out at 60˚C for 24 hours for the first time, and at 60˚C for 48 hours for the second time after the 2-propanol was exchanged.

The alcogel was dried supercritically under the condition as follows.

The inside of an autoclave having a capacity of 400 mL was filled with 2-propanol and the alcogel having undergone the solvent substitution was placed therein. The cover was shut and liquefied carbon dioxide was fed thereinto and thereby a pressure of approximately 882 $N/cm^2$ (about 90 $kgf/cm^2$) was maintained. In this state, a first liquid phase substitution operation was carried out. (Time required for this operation: 1.5 hours)

After the completion of the first liquid phase substitution, the valve was closed to maintain the pressure. In this state, the liquefied carbon dioxide was allowed to diffuse into the gel over a period of 17.5 hours.

Thereafter, a second liquid phase substitution was carried out in the same manner as in the first liquid phase substitution, while a pressure of approximately 882 $N/cm^2$ (about 90 $kgf/cm^2$) was maintained. (Time required for this operation: 1 hour)

After the completion of the second liquid phase substitution, the valve was closed to the pressure in the same manner as in the time. In this state, the liquefied carbon dioxide as allowed to diffuse into the gel over a period of 5 hours.

Thereafter, a third liquid phase substitution was carried out in the same manner as in the first liquid phase substitution, while a pressure of approximately 882 $N/cm^2$ (about 90 $kgf/cm^2$) was maintained. (Time required for this operation: 0.75 hour)

After the completion of the third liquid phase substitution, the valve was closed to raise the temperature of the autoclave from room temperature to 80˚C over a period of 1.5 hours.

After the temperature was raised to 80˚C, the pressure was released at a rate of 4.9 $N/cm^2 \cdot min$ (0.5 $kgf/cm^2 \cdot min$).

After the pressure was released to reach atmospheric pressure, the autoclave was cooled to room temperature over a period of 2 hours.

Thereafter, the autoclave was opened and the alkylsiloxane aerogel was taken out. Thus the supercritical drying was completed.

(Sample 6)

An alcogel was produced in the same manner as in Sample 5 except that the cationic surfactant was changed from CTAB used in Example 5 to cetyltrimethylammonium chloride (also known as hexadecyltrimethylammonium chloride, manufactured by Nacalai Tesque, Inc., hereinafter abbreviated as CTAC), and the supercritical drying was carried out under the same conditions as in Sample 5. Thus an alkylsiloxane aerogel was obtained

(Sample 7)

An alcogel was produced in the same manner as in Sample 5 except that the surfactant was changed from the one used in Sample 5 to sodium dodecyl sulfonate (manufactured by Nacalai Tesque, Inc., hereinafter abbreviated as SDS), which was used as an anionic surfactant, and the supercritical drying was carried out under the same condition as in Sample 5. Thus an alkylsiloxane aerogel was obtained.

(Sample 8)

An alcogel was produced under the same condition as in Sample 5.

The alcogel was dried subcritically under the condition as follows.

The inside of an autoclave having a capacity of about 400 was filled with 2-propanol and the alcogel having undergone the solvent substitution was placed therein.

The cover was shut and liquefied carbon dioxide was fed thereinto and thereby a pressure of 729.12 N/cm$^2$ (74.4 kgf/cm$^2$) was maintained. In this state, a first liquid phase substitution operation was carried out. (Time required for this operation: 1.5 hours)

After the completion of the first liquid phase substitution, the valve was closed to maintain the pressure. In this state, the liquefied carbon dioxide was allowed to diffuse into the gel over a period of 17.5 hours.

Subsequently, second liquid phase substitution was carried out in the same manner as in the first liquid phase substitution, while a pressure of approximately 729.12 N/cm$^2$ (74.4 kgf/cm$^2$) was maintained. (Time required for this operation: 1 hour)

After the completion of the second liquid phase substitution, the value was closed to maintain the pressure in the same manner as in the first time. In this state, the liquefied carbon dioxide was allowed to diffuse into the gel over a period of 5 hours.

Subsequently, third liquid phase substitution was carried out in the same manner. (Time required for this operation: 0.75 hour)

After the completion of the third liquid phase substitution, the valve was closed and the temperature of the autoclave was raised from room temperature to 31°C over a period of 1.5 hours.

When the temperature was raised to 31°C, the pressure was released at a rate of 4.9 N/cm$^2$·min (0.5 kgf/cm$^2$·min).

When the pressure was released to reach atmospheric pressure, the autoclave was cooled over a period of 1 hour.

Subsequently, the autoclave was opened and the alkylsiloxane aerogel was taken out. Thus subcritical drying was completed.

(Sample 9)

An alcogel was produced in the same manner as in Sample 5 except that the surfactant used in Sample 5 was not added, and supercritical drying was carried out under the same condition as in Sample 5. Thus an alkylsiloxane aerogel was obtained.

The drying methods, the types of solvents, the types of the surfactants and the silicon raw materials and the amounts thereof to be added, and the amounts of acetic acid aqueous solution and urea to be added used in the respective examples above are set forth in Table 1 below.

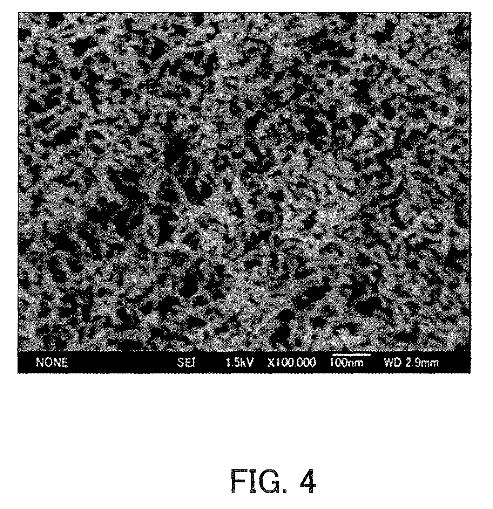

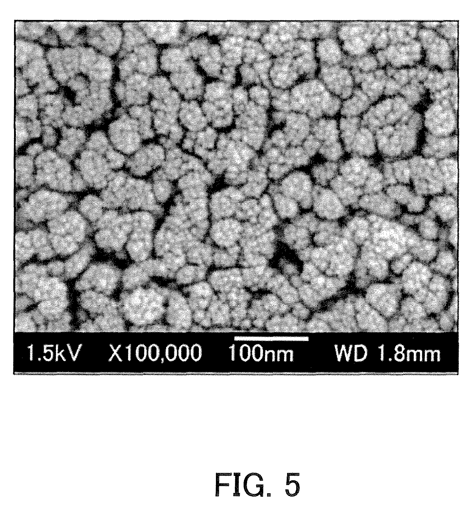

FIG. 4 is a view of the three-dimensional network structure of the alkylsiloxane aerogel of Sample 1 when observed using a scanning electron microscope. FIG. 5 is a view showing the three-dimensional network structure of the alkylsiloxane aerogel of Sample 9 when observed using a scanning electron microscope.

(Measurement of Pore Diameter, Diameter of Gel Skeleton, Density, and Porosity)

With respect to the alkylsiloxane aerogel of each sample above, the center pore diameter of the through-holes (pores) which are contiguous with each other in the form of a three-dimensional network, the diameter of the cross section of the skeletons when the cross section was assumed as being a circle, the density, and the porosity were measured by the mercury penetration method. The measurement results are set forth in Table 2 below.

(Measurement of Optical Transmittance)

In order to evaluate the optical transparency of the dried alkylsiloxane aerogel of each sample above, optical transmittance thereof was measured. In order to allow each alkylsiloxane aerogel to have an upper surface and lower surface in parallel with each other, the alkylsiloxane aerogel was shaped with sand paper of at least #1500 as needed.

The ultraviolet-visible spectrophotometer used herein was the spectrophotometer V-530 manufactured by JASCO Corporation. It was set as follows: photometric mode: %T, response: fast, the band width: 2.0 nm, scan rate: 2000 nm/min, range of measurement wavelength: 1000 nm to 200 nm, and the data capture interval: 2.0 nm.

With respect to the optical transmittance, data obtained at the wavelength of 550 nm (visible light) were employed and then were corrected into the value to be obtained when the alkylsiloxane aerogel had a thickness of 10 mm. Transmittance $T_C$ after the thickness correction is expressed as the following formula obtained by varying Lambert's formula:

$$T_C = 10^{(\log(T/100) \times 10/d)} \times 100$$

where $T$ is the transmittance (%) obtained before the correction and $d$ is the tickness of a measurement sample. The measurement results are set forth in Table 2 below.

(Evaluation of Thermal Insulation)

In order to evaluate the thermal insulation of the alkylsiloxane aerogel of each sample above, thermal conductivity thereof was measured.

A measurement sample was made by shaping the alkylsiloxane aerogel into a 1-mm-thick sheet. The guarded thermal conductivity measuring device used herein was a thermal conductivity instrument GH-1 manufactured by ULVAC-RIKO, Inc.

The sample was sandwiched between an upper heater and a lower heater with a load of 0.3 MPa. Then, a temperature difference $\Delta T$ was provided to allow a guarded heater to induce one-dimensional thermal flow, and thermal resistance $R_S$ of the sample was determined by using the following formula:

$$R_S = N((T_U - T_L)/Q) - R_O$$

where $T_U$ is the sample upper surface temperature, $T_L$ is the sample lower surface temperature, $R_O$ is thermal contact resistance of the interfaces of the upper portion and the lower portion, and $Q$ is the output power of a heat flow meter. Furthermore, $N$ is a proportionality coefficient and is determined beforehand using a calibration material.

Thermal conductivity $\lambda$ of the sample was determined according to the following formula:

$$\lambda = d/R_S$$

where $d$ is the thickness of the measurement sample. The measurement results are set forth in Table 2 below.

(Evaluation of Mechanical Strength)

In order to evaluate the mechanical strength of alkylsiloxane aerogel of each sample above, compression breaking stress, bulk modulus, a maximum deformation ratio, a deformation restoring ratio, and a Poisson's ratio thereof were measured.

The alkylsiloxane aerogels each were shaped into a cube (a dice shape) whose sides were 7.5 mm and used as a measurement sample. The device used herein was EZTest manufactured by Shimadzu Corporation. A 10-mm $\phi$ jig for compression measurement was used for the measurement of the bulk modulus. The load cell used 500 N.

Each measurement sample was placed on the jig and the compression was carried out at a rate of 1 mm/min. The measurement was stopped at the time either when the measurement sample was broken or when the load exceeded 500 N.

The measurement items were the bulk modulus (10 to 20 N) and the breaking stress (maximum point stress) (at the time either when the sample was broken or when the load exceeded 500 N).

Given $d1$ as the thickness of each measurement sample before the load was applied, $d2$ as the thickness of each measurement sample at the maximum load of 500N, and $d3$ as the thickness of each measurement sample after the load was removed, then the maximum deformation ratio and the deformation restoring ratio were calculated as follows:

$$Maximum\ Deformation\ Ratio = (d1 - d2)/d1 \times 100$$

$$Deformation\ Restoring\ Ratio = (d3 - d2)/(d1 - d2) \times 100.$$

Given $d1$ as the thickness of each sample, $w1$ as the width of each measurement sample, and $dx$ and $wy$, respectively, as the thickness and the width of each measurement sample under application of the compression load, then a Poisson's ratio was calculated within the elastic range of each alkylsiloxane aerogel as follows:

$$Poisson's\ ratio = |((wy - w1)/w1)/((d1 - dx)/d1)|.$$

The measurement results are set forth in Table 2 below.

Table 1

|  | Drying Condition | Solvent | Surfactant | |
|---|---|---|---|---|
|  |  |  | Type | Amount to add [g] |
| Sample 1 | Atmospheric | Vertrel XF | CTAB | 1.0 |
| Sample 2 | Atmospheric | Vertrel XF | CTAB | 1.2 |
| Sample 3 | Atmospheric | Vertrel XF | F-127 | 2.0 |
| Sample 4 | Atmospheric | Fluorinert FC72 | CTAB | 1.0 |
| Sample 5 | Supercritical | $CO_2$ | CTAB | 1.0 |
| Sample 6 | Supercritical | $CO_2$ | CTAC | 1.0 |
| Sample 7 | Supercritical | $CO_2$ | SDS | 1.0 |
| Sample 8 | Subcritical | $CO_2$ | CTAB | 1.0 |
| Sample 9 | Supercritical | $CO_2$ | - | - |

Table 1 (Continuation)

|  | Acetic Acid Aqueous Solution | Si Raw Material | | Urea [g] |
|---|---|---|---|---|
|  | Amount to add [g] | Type | Amount to add [mL] | |
| Sample 1 | 10 | MTMS | 5.0 | 0.5 |
| Sample 2 | 10 | MTMS | 10.0 | 1.0 |
| Sample 3 | 10 | MTMS | 10.0 | 1.0 |
| Sample 4 | 10 | TEOS | 5.0 | 0.5 |
| Sample 5 | 10 | MTMS | 5.0 | 0.5 |
| Sample 6 | 10 | MTMS | 5.0 | 0.5 |
| Sample 7 | 10 | MTMS | 5.0 | 0.5 |
| Sample 8 | 10 | MTMS | 5.0 | 0.5 |
| Sample 9 | 10 | MTMS | 5.0 | 0.5 |

Table 2

| | State of Gel | Center Pore Diameter [nm] | Skeleton Diameter [nm] | Density [g/cm³] | Porosity [%] | Visible-Light (550 nm) Transmittance [%] |
|---|---|---|---|---|---|---|
| Sample 1 | Unbroken | 30 | 5 | 0.20 | 91.9 | 89.36 |
| Sample 2 | Unbroken | 35 | 4.5 | 0.21 | 90.3 | 87.21 |
| Sample 3 | Unbroken | 30 | 5 | 0.28 | 86.4 | 84.27 |
| Sample 4 | Pulverized | - | - | 0.20 | - | - |
| Sample 5 | Unbroken | 30 | 5 | 0.19 | 91.8 | 90.27 |
| Sample 6 | Unbroken | 35 | 6 | 0.21 | 90.5 | 87.52 |
| Sample 7 | Unbroken | 35 | 8 | 0.28 | 87.5 | 85.43 |
| Sample 8 | Unbroken | 50 | 4 | 0.18 | 92.0 | 88.67 |
| Sample 9 | Unbroken | 10 | - | 0.17 | 92.5 | 91.6 |

Table 2 (Continuation)

| | Thermal Conductivity [W/m·K] | Breaking Stress [MPa] | Bulk Modulus [MPa] | Maximum Compression Deformation Ratio [%] | Deformation Restoring Ratio [%] | Poisson Ratio |
|---|---|---|---|---|---|---|
| Sample 1 | 0.18 | 7.59 | 2.93 | 75.47 | 83.15 | 0.01 |
| Sample 2 | 0.19 | 7.55 | 7.25 | 77.40 | 98.40 | 0.01 |
| Sample 3 | 0.27 | 10.43 | 8.44 | 73.18 | 85.23 | 0.02 |
| Sample 4 | - | - | - | - | - | - |
| Sample 5 | 0.16 | 7.59 | 2.93 | 79.33 | 85.84 | 0.01 |
| Sample 6 | 0.18 | 7.55 | 7.41 | 77.40 | 88.40 | 0.01 |
| Sample 7 | 0.25 | 10.43 | 8.18 | 73.18 | 85.23 | 0.02 |
| Sample 8 | 0.16 | 8.17 | 3.69 | 87.20 | 80.30 | 0.01 |
| Sample 9 | 0.17 | 0.66 | 3.93 | 32.10 | - | - |

As is shown in FIG. 4, the alkylsiloxane aerogel of Sample 1 has the structure in which through-holes that have the center pore diameter of the order of 30 nm and are contiguous with each other in the form of a three-dimensional network and skeletons that are made of alkylsiloxane and have the diameter of the order of 5 nm (assuming that the cross section of the skeletons is a circle) are intertwined in the form of a three-dimensional network.

On the contrary, the alkylsiloxane aerogel of Sample 9 shown in FIG. 5 is of a shape like an aggregation of particles, and it can be therefore understood that the three-dimensional network structure is absent.

As set forth in Table 2 above, each of the alkylsiloxane aerogels of Samples 1 through 3 obtained by the drying at a temperature and a pressure below the critical point of the solvent and the alkylsiloxane aerogels of Samples 5 through 8 obtained by the supercritical drying or the subcritical drying has a three-dimensional network structure formed of through-holes that have the center pore diameter of the order of 30 nm and the skeletons that are made of alkylsiloxane and have the diameter in the neighborhood of 5 nm. Further, it can be understood that the alkylsiloxane aerogels of Samples 1 through 3 and Samples 5 through 8 have high visible-light transmittance, low thermal conductivity, and high mechanical strength (breaking stress, deformation restoring ratio, maximum deformation ratio, and bulk modulus).

Also, the alkylsiloxane aerogels of Samples 1 through 3 are gels produced using a solvent having the surface tension of 15 mN/m or below as the drying solvent and by carrying out the drying at a temperature and a pressure below the critical point of the drying solvent. It is confirmed that the gels were not broken even when such atmospheric drying was carried out.

Further, it is confirmed from the results that the gels of Samples 1 through 3 obtained by the drying at a temperature and a pressure below the critical point of the drying solvent ensure visible-light transmittance and mechanical strength as good as those of the alkylsiloxane aerogels of Samples 5 through 8 obtained by the supercritical or subcritical drying.

On the contrary, the alkylsiloxane aerogel of Sample 4 was pulverized during the drying under atmospheric pressure. The cause of this is thought to be that the three-dimensional network structure in the mesoscopic region was not formed due to the use of a silicon compound other than the silicon compounds (the silicon compound whose molecules have a hydrolysable functional group and a nonhydrolysable functional group) to be used in the producing method of the invention, which made this alkylsiloxane aerogel inferior to the alkylsiloxane aerogels of Samples 1 through 3 in skeleton strength and skeleton flexibility.

Also, it can be understood that the alkylsiloxane aerogel of Sample 9 had compression breaking stress of lower than 1 MPa and is therefore inferior to those of Samples 1 through 3 and Samples 5 through 8 in mechanical strength. The cause of this is thought that because the surfactant was not added to the gel producing solution, the skeletons thereof did not have as good flexibility as the skeletons that form the three-dimensional network structure as in the alkylsiloxane aerogels of Samples 1 through 3 and Samples 5 through 8 and the skeletons had poor compression strength.

Industrial Applicability

Because the alkylsiloxane aerogels of the present invention and the alkylsiloxane aerogels produced by the producing method of the present invention have high mechanical strength, they are applicable in a wide range of places as thermal insulators for buildings and sound insulators for buildings. Further, because they achieve high visible-light transmittance at the same time, they are applicable to transparent thermal insulators for solar thermal collectors, transparent thermal-insulating window materials for buildings, and transparent sound insulators for buildings. Further, they are applicable to a Cerenkov radiation detector and a cosmic dust collector. Besides the foregoing, in a case where they are doped with functional ions or molecules and used as a carrier, they can be utilized as a catalyst, a sensor, and a reaction field.

**Claims**

1. A method for producing an alkylsiloxane aerogel, comprising:

   (a) a step of letting a reaction to produce a sol and a reaction to convert the sol to a gel take place in one step by adding a silicon compound whose molecules have a hydrolysable functional group and a nonhydrolysable functional group to an acidic aqueous solution containing a surfactant; and
   (b) a step of drying the gel produced in the step (a),

   wherein, in the step (b), the gel is dried at a temperature and a pressure below a critical point of a solvent used to dry the gel.

2. The method for producing an alkylsiloxane aerogel according to claim 1, wherein:
   in the step (a), the acidic aqueous solution further contains a hydrolysable compound that produces a material promoting the reaction to convert the sol to a gel through hydrolysis, and the reaction to convert the sol to a gel is carried out by letting the hydrolysable compound undergo hydrolysis.

3. The method for producing an alkylsiloxane aerogel according to claim 1, wherein:

   in the step (b), a volume of the gel is contracted when the gel is dried and the volume of the gel is restored later.

4. The method for producing an alkylsiloxane aerogel according to claim 3, wherein:

   in the step (b), the volume of the gel that has been restored is 50% or more of the volume of the gel before the drying.

5. The method for producing an alkylsiloxane aerogel according to claim 3, wherein:

in the step (b), an evaporation rate of the solvent before the volume of the gel is contracted is in a range from 0.01 g/h to 0.35 g/h both inclusive per 1 $cm^3$ of the gel.

6. The method for producing an alkylsiloxane aerogel according to claim 1, wherein:

   surface tension of the solvent is 15 mN/m or below.

7. The method for producing an alkylsiloxane aerogel according to claim 1, wherein:

   the number of the nonhydrolysable functional group of the silicon compound is at least one selected from 1 and 2.

8. The method for producing an alkylsiloxane aerogel according to claim 7, wherein:

   the silicon compound is at least one selected from methyltrimethoxysilane and dimethyldimethoxysilane.

9. The method for producing an alkylsiloxane aerogel according to claim 1, wherein:

   the surfactant includes at least one type selected from a nonionic surfactant, a cationic surfactant, an anionic surfactant, and an amphoteric surfactant.

10. The method for producing an alkylsiloxane aerogel according to claim 9, wherein:

    the nonionic surfactant is at least one selected from polyoxyethylene nonylphenly ether, polyoxyethylene octylphenyl ether, polyoxyethylene alkyl ether, polyoxypropylene alkyl ether, and a block copolymer of polyoxyethylene and polyoxypropylene.

11. The method for producing an alkylsiloxane aerogel according to claim 9, wherein:

    the cationic surfactant is at least one selected from cetyltrimethylammonium bromide and cetyltrimethylammonium chloride.

12. The method for producing an alkylsiloxane aerogel according to claim 9, wherein:

    the anionic surfactant is sodium dodecyl sulfonate.

13. The for producing an alkylsiloxane aerogel according to claim 2, wherein:

    the hydrolysable compound is a compound that produces a basic catalytic material through hydrolysis.

14. The method for producing an alkylsiloxane aerogel according to claim 13, wherein:

    the hydrolysable compound is urea.

15. An alkylsiloxane aerogel having a three-dimensional network structure formed of through-holes that are contiguous with each other in a form of a three-dimensional network and skeletons that are made of alkylsiloxane and contiguous with each other in a form of a three-dimensional network.,
    wherein a diameter of the through-holes is in a range from 5 nm to 100 nm both inclusive and a diameter of a sectional area of the skeletons is in a range from 2 nm to 25 nm both inclusive.

16. The alkylsiloxane aerogel according to claim 15, wherein:

    compression breaking stress is 5 MPa or higher.

17. The alkylsiloxane aerogel according to claim 15, wherein:

    a maximum compression deformation ratio is 50% or higher and a deformation restoring ratio is 80% or higher.

18. The alkylsiloxane aerogel according to claim 15, wherein:

a Poisson's ratio by uniaxial compression is 0.05 or lower.

**19.** The alkylsiloxane aerogel according to claim 15, wherein:

transmittance of light having a wavelength of 500 nm to 1000 nm is 50% or higher when corrected into a value to be obtained with the alkylsiloxane aerogel having a thickness of 10 mm.

**20.** An apparatus for producing an alkylsiloxane aerogel, comprising:

a dryer that dries an alkylsiloxane gel containing a solvent,
wherein the includes:

a hermetically sealable container capable of accommodating therein the alkylsiloxane gel;
a control portion capable of controlling an evaporation rate of the solvent contained in the alkylsiloxane gel; and
stirring means, provided inside the container, for making a gas concentration of the solvent inside the container homogeneous by stirring atmosphere within the container.

**21.** The apparatus for producing an alkylsiloxane aerogel according to claim 20, further comprising:

a reaction device that lets a reaction to produce a sol and a reaction to obtain an alkylsiloxane gel by converting the sol to a gel take place in one step,
wherein the reaction device includes a container portion, a stirrer that stirs a reaction material inside the container, and temperature control means for controlling a temperature of the reaction material inside the container.

**22.** A method for manufacturing a panel containing an alkylsiloxane aerogel, comprising:

(A) a step of letting a reaction to produce a sol and a reaction to convert the sol to a gel take place in one step by adding a silicon compound whose molecules have a hydrolysable functional group and a nonhydrolysable functional group to an acidic aqueous solution containing a surfactant;
(B) a step of letting the gel produced in the step (A) contract by drying the gel at a temperature and a pressure below a critical point of a solvent used to dry the gel; and
(C) a step of placing the gel that has contracted inside a frame, followed by further drying of the gel at a temperature and a pressure below the critical point of the solvent for allowing the gel to adhere closely to the frame by letting a volume of the gel restore, so that the gel and the frame are made into a single piece.

PREPARATION OF SOL

POURING INTO MOLD

GELLING AND AGING

FIG. 1

PREPARATION OF SOL
(FIRST STEP)

PREPARATION OF SOL
(SECOND STEP)

POURING INTO MOLD

GELLING AND AGING

FIG. 2

CONTROL
PORTION  — 32

3

31

34

35

33          33

FIG. 3

NONE　　　　SEI　1.5kV　X100,000　100nm　WD 2.9mm

FIG. 4

FIG. 5

| **INTERNATIONAL SEARCH REPORT** | International application No. |
|---|---|
| | PCT/JP2006/314298 |

**A. CLASSIFICATION OF SUBJECT MATTER**
*C08G77/04(2006.01)i*

According to International Patent Classification (IPC) or to both national classification and IPC

**B. FIELDS SEARCHED**

Minimum documentation searched (classification system followed by classification symbols)
C08G77/00-77/62, C01B33/00-33/193

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
WPI/L, CAS ONLINE

**C. DOCUMENTS CONSIDERED TO BE RELEVANT**

| Category* | Citation of document, with indication, where appropriate, of the relevant passages | Relevant to claim No. |
|---|---|---|
| Y1 | JP 2001-55508 A (Lucent Technologies Inc.), 27 February, 2001 (27.02.01), Claims 1 to 77; Par. No. [0029] & EP 1069081 A2 & US 6423770 B1 | 1-22 |
| Y1 | WO 98/29350 A2 (MERCK PATENT GMBH), 09 July, 1998 (09.07.98), Claims 1 to 10; description, page 6, line 21 & JP 10-182261 A & JP 10-182260 A | 1-22 |
| Y2 | JP 6-219726 A (Meisei Industrial Co., Ltd.), 09 August, 1994 (09.08.94), Claim 1; Par. Nos. [0001] to [0009] (Family: none) | 1-22 |

[X] Further documents are listed in the continuation of Box C.     [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 October, 2006 (17.10.06) | 31 October, 2006 (31.10.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/314298

C (Continuation).   DOCUMENTS CONSIDERED TO BE RELEVANT

| Category* | Citation of document, with indication, where appropriate, of the relevant passages | Relevant to claim No. |
|---|---|---|
| Y2 | JP 2003-212999 A  (Matsushita Electric Industrial Co., Ltd.), 30 July, 2003 (30.07.03), Claims 1 to 8; Par. Nos. [0001] to [0007], [0034] (Family: none) | 1-22 |
| A | JP 2003-206125 A  (Matsushita Electric Industrial Co., Ltd.), 22 July, 2003 (22.07.03), Claims 1 to 12 (Family: none) | 1-22 |
| A | JP 8-504674 A  (University of New Mexico), 21 May, 1996 (21.05.96), Claims 1 to 13 & WO 94/25149 A1 | 1-22 |
| A | JP 10-72212 A  (Asahi Chemical Industry Co., Ltd., The Noguchi Institute), 17 March, 1998 (17.03.98), Claims 1 to 8 & WO 97/46743 A1        & US 6284696 B1 | 1-22 |
| A | JP 2003-231755 A  (Mitsubishi Chemical Corp.), 19 August, 2003 (19.08.03), Claims 1 to 7 (Family: none) | 1-22 |
| A | JP 7-247180 A  (Naohiro SOGA, Kazuki NAKANISHI), 26 September, 1995 (26.09.95), Claims 1 to 6 (Family: none) | 1-22 |
| A | JP 2005-510436 A  (University of Massachusetts), 21 April, 2005 (21.04.05), Claims 1 to 98 & WO 03/045840 A2 | 1-22 |
| A | US 4374933 A  (Fraunhofer-Gesellschaft), 22 February, 1983 (22.02.83), & DE 2925969 A1 | 1-22 |
| A | JP 2002-521302 A  (Thomas GESSNER, Stefan SCHULZ, Thoralf WINKLER E.), 16 July, 2002 (16.07.02), & WO 00/06491 A1 | 1-22 |
| P,A | JP 2005-290032 A  (Kazuki NAKANISHI, Naohiro SOGA, Kabushiki Kaisha Kyoto Monotekku), 20 October, 2005 (20.10.05), Claims 1 to 3 (Family: none) | 1-22 |

Form PCT/ISA/210 (continuation of second sheet) (April 2005)

**INTERNATIONAL SEARCH REPORT**

International application No.

PCT/JP2006/314298

C (Continuation).    DOCUMENTS CONSIDERED TO BE RELEVANT

| Category* | Citation of document, with indication, where appropriate, of the relevant passages | Relevant to claim No. |
|---|---|---|
| P,A | JP 2005-290033 A  (Kazuki NAKANISHI, Naohiro SOGA, Kabushiki Kaisha Kyoto Monotekku), 20 October, 2005 (20.10.05), Claims 1 to 4 & US 2005/0285290 A1 | 1-22 |

Form PCT/ISA/210 (continuation of second sheet) (April 2005)

<table>
<tr><td><strong>INTERNATIONAL SEARCH REPORT</strong></td><td>International application No.<br>PCT/JP2006/314298</td></tr>
</table>

**Box No. II**      **Observations where certain claims were found unsearchable (Continuation of item 2 of first sheet)**

This international search report has not been established in respect of certain claims under Article 17(2)(a) for the following reasons:

1. ☐   Claims Nos.:
     because they relate to subject matter not required to be searched by this Authority, namely:

2. ☐   Claims Nos.:
     because they relate to parts of the international application that do not comply with the prescribed requirements to such an extent that no meaningful international search can be carried out, specifically:

3. ☐   Claims Nos.:
     because they are dependent claims and are not drafted in accordance with the second and third sentences of Rule 6.4(a).

**Box No. III**      **Observations where unity of invention is lacking (Continuation of item 3 of first sheet)**

This International Searching Authority found multiple inventions in this international application, as follows:

    (See extra sheet)

1. ☒   As all required additional search fees were timely paid by the applicant, this international search report covers all searchable claims.

2. ☐   As all searchable claims could be searched without effort justifying an additional fee, this Authority did not invite payment of any additional fee.

3. ☐   As only some of the required additional search fees were timely paid by the applicant, this international search report covers only those claims for which fees were paid, specifically claims Nos.:

4. ☐   No required additional search fees were timely paid by the applicant. Consequently, this international search report is restricted to the invention first mentioned in the claims; it is covered by claims Nos.:

**Remark on Protest**
the
     ☐   The additional search fees were accompanied by the applicant's protest and, where applicable, payment of a protest fee..

     ☐   The additional search fees were accompanied by the applicant's protest but the applicable protest fee was not paid within the time limit specified in the invitation.

     ☒   No protest accompanied the payment of additional search fees.

Form PCT/ISA/210 (continuation of first sheet (2)) (April 2005)

**INTERNATIONAL SEARCH REPORT**

| International application No. |
|---|
| PCT/JP2006/314298 |

Continuation of Box No.III of continuation of first sheet(2)

<Regarding Unity of Invention>

The inventions of claims 1-14, 22 relate to "a method for producing an alkylsiloxane aerogel" or "a method for manufacturing a panel containing an alkylsiloxane aerogel" having a reaction step and a drying step. <Group I>

The inventions of claims 15-19 relate to "an alkylsiloxane aerogel" having specific properties. <Group II>

The inventions of claims 20-21 relate to "an apparatus for producing an alkylsiloxane aerogel" having a solvent evaporation rate controlling means or a temperature controlling means. <Group III>

Although the feature common to the Groups I-III is "an alkylsiloxane aerogel", this substance cannot be a special technical feature since it has been well known.

Consequently, claims 1-14, 22 <Group I>, claims 15-19 <Group II> and claims 20-21 <Group III> do not satisfy the requirement of unity of invention, and the number of inventions of this international application is considered to be 3.

Form PCT/ISA/210 (extra sheet) (April 2005)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10182261 A

- JP 2005154195 A

**Non-patent literature cited in the description**

- **H. DONG et al.** *Chem. Master,* vol. 200517 (11), 2807-2816